# EUROPÄISCHE PATENTANMELDUNG

(11) **EP 4 467 243 A2**
(43) Veröffentlichungstag der Anmeldung: **27.11.2024**
(21) Anmeldenummer: 24205566.3
(22) Anmeldetag: 24.10.2019
(51) Int. Cl.: B05B 7/14

(54) **AUSWECHSELBARE DÜSENSPITZE FÜR EIN DENTALES PULVERSTRAHLGERÄT**

(30) Priorität: 29.10.2018 DE 102018126926
(62) Teilanmeldung aus: 19205136.5
(71) Anmelder: Dürr Dental SE, 74321 Bietigheim-Bissingen (DE)
(72) Erfinder: Beurer, Matthias, 70499 Stuttgart (DE); Kratt, Michael, 70180 Stuttgart (DE); Rieger, Valentin-Cristian, 71364 Winnenden (DE); Schweizer, Margit, 74321 Bietigheim-Bissingen (DE)
(74) Vertreter: Frenkel, Matthias Alexander

(57) **Zusammenfassung**

Die Erfindung betrifft eine auswechselbare Düsenspitze (20) für ein dentales Pulverstrahlgerät (10), mit einem länglichen Körper, der sich in einen ersten (22) und einen zweiten Längsabschnitt (24) gliedert, wobei der erste Längsabschnitt (22) eine Verbindungsschnittstelle (26) für ein lösbares Anbringen an dem Pulverstrahlgerät und der zweite Längsabschnitt (24) zumindest abschnittsweise einen kreisförmigen Querschnitt mit einem inneren Kanal (82) für ein Pulver-Luft-Gemisch und einer äußeren Mantelfläche (48) aufweist. Die Düsenspitze kennzeichnet sich dadurch aus, dass an der Mantelfläche (48) des zweiten Längsabschnitts (24) zumindest ein sich in Längsrichtung erstreckendes Wasserführungselement (54) vorgesehen ist, eine einzige Auslassöffnung (50) für das Pulver-Luft Gemisch an der Mantelfläche (48) des zweiten Längsabschnitts (24) vorgesehen ist, in die der innere Kanal (82) mündet, und der erste Längsabschnitt (22) an seinem dem zweiten Längsabschnitt zugewandten Bereich zumindest eine Öffnung (52) für Wasser aufweist, wobei die zumindest eine Öffnung (52) in das zumindest eine Wasserführungselement (54) mündet.

## Beschreibung

Die Erfindung betrifft eine auswechselbare Düsenspitze für ein dentales Pulverstrahlgerät.

Derartige auswechselbare Düsenspitzen für dentale Pulverstrahlgeräte sind allgemein bekannt. Pulverstrahlgeräte werden im dentalen Bereich für die supra- und subgingivale Anwendung bei Prophylaxebehandlungen verwendet. Ein Gemisch aus Pulver und Luft wird auf den Zahn geführt, um dort vorhandene Ablagerungen zu entfernen. Zusätzlich wird Wasser zugeführt, um das Pulver und die Ablagerungen abzuführen bzw. das Wasser umhüllt den Pulver-Luftstrahl und sorgt dafür, dass es nicht zu einer starken Staubentwicklung kommt.

Die bekannten Pulverstrahlgeräte verfügen üblicherweise über auswechselbare Düsenspitzen, die das Pulver-Luft Gemisch sowie Wasser an den Zahn führen und mit diesem folglich in Kontakt gelangen. Für eine subgingivale Behandlung sind solche Düsenspitzen so dimensioniert, dass sie auch innerhalb einer Zahnfleischtasche eingesetzt werden können.

Aus der Druckschrift DE 103 31 583 B3 ist beispielsweise ein Düsenstück für ein dentales Pulverstrahlgerät bekannt, das auch eine subgingivale Behandlung ermöglicht. Das Düsenstück besitzt mehrere Düsenöffnungen, die in der Mantelfläche eines vorderen Abschnitts eines Röhrchens ausgebildet sind. Durch diese mehreren Öffnungen gelangt das Pulver-Luft Gemisch nach außen. Zusätzlich ist ein konzentrisch zum Röhrchen vorgesehener Kanal zur Führung von Wasser vorgesehen.

Durch das Bereitstellen von zwei abgeschlossenen Kanälen, nämlich einerseits für Wasser und andererseits für das Pulver-Luft-Gemisch, entsteht eine Düsenspitze, die relativ groß baut und damit für die subgingivale Behandlung ungünstig ist. Um diesem Problem zu entgehen, wird in diesem Dokument vorgeschlagen, das Röhrchen oval auszugestalten, so dass es besser in eine Zahnfleischtasche eingebracht werden kann.

Der Nachteil einer solchen ovalen Form besteht allerdings darin, dass sich die Flexibilität deutlich reduziert, was zu einer Verschlechterung des Handlings führt. Eine Verkleinerung der kreisförmigen Bauform führt jedoch zu sehr geringen Wandstärken der Kanäle, so dass eine solche Spitze sehr leicht abknicken kann.

Aus dem Dokument EP 2 965 708 B1 ist ebenfalls eine auswechselbare Düsenspitze für ein dentales Pulverstrahlgerät bekannt. Die Düsenspitze verfügt über eine einzige Austrittsöffnung für das Pulver-Luft-Gemisch sowie eine weitere Öffnung am Längsende für Wasser. Aufgrund der beiden im Inneren der Düsenspitze verlaufenden Kanäle für Wasser und das Pulver-Luft Gemisch besitzt die Düse eine nicht kreisförmige ovale Form, die ebenfalls zu den zuvor genannten Nachteilen führt.

Darüber hinaus kann bei einer subgingivalen Behandlung ein auch in Längsrichtung austretender Pulver-Luftstrahl zu einer Emphysembildung führen.

Vor diesem Hintergrund besteht eine Aufgabe der vorliegenden Erfindung darin, eine auswechselbare Düsenspitze für ein dentales Pulverstrahlgerät anzugeben, die die vorgenannten Nachteile überwindet. Die auswechselbare Düsenspitze soll insbesondere die Gefahr von Emphysembildungen reduzieren und eine hohe Flexibilität und einen großen Strahlbereich ohne Einbußen bei der Stabilität erzielen.

Diese Aufgabe wird durch eine auswechselbare Düsenspitze für ein dentales Pulverstrahlgerät mit den Merkmalen des Anspruchs 1 gelöst.

Die auswechselbare Düsenspitze weist einen länglichen Körper auf, der sich in einen ersten und einen zweiten Längsabschnitt gliedert, wobei der erste Längsabschnitt eine Verbindungsschnittstelle für ein lösbares Anbringen an dem Pulverstrahlgerät und der zweite Längsabschnitt einen kreisförmigen Querschnitt mit einem inneren Kanal für ein Pulver-Luft Gemisch und einer äußeren Mantelfläche aufweist. Der Mantelfläche des zweiten Längsabschnitts ist zumindest ein sich in Längsrichtung erstreckendes Wasserführungselement zugeordnet. Ferner ist eine einzige Auslassöffnung für das Pulver-Luft Gemisch an der Mantelfläche des zweiten Längsabschnitts vorgesehen, in die der innere Kanal mündet, und der erste Längsabschnitt weist an seinem dem zweiten Längsabschnitt zugewandten Bereich zumindest eine Öffnung für Wasser auf, wobei die zumindest eine Öffnung in das zumindest eine Wasserführungselement mündet.

Das heißt mit anderen Worten, dass die erfindungsgemäße Düsenspitze nur einen inneren Kanal aufweist, der in die einzige Auslassöffnung für das Pulver-Luft Gemisch an der Mantelfläche mündet. Ein separat vorgesehener Kanal für das Wasser ist zumindest im zweiten Längsabschnitt nicht vorgesehen. Vielmehr läuft das Wasser aus den Öffnungen heraus zu der Mantelfläche und an dieser entlang, wobei das Wasserführungselement im einfachsten Fall die Mantelfläche selbst ist.

Durch den Verzicht eines eigenen Kanals für die Wasserführung wird eine besonders schlanke Gestaltung der Düsenspitze, insbesondere des zweiten Längsabschnitts möglich. Daraus ergibt sich wiederum die Möglichkeit, den Querschnitt kreisförmig auszubilden, so dass eine Flexibilität in allen Richtungen möglich ist.

Darüber hinaus wird die Gefahr von Emphysembildungen deutlich reduziert, da das Pulver-Luft Gemisch nicht direkt nach unten gerichtet austritt..

Die Aufgabe der Erfindung wird damit vollkommen gelöst.

Bei einer bevorzugten Weiterbildung weist die Auslassöffnung einen Öffnungsbereich auf, der sich über zumindest ein Viertel des Umfangs des Längsabschnitts erstreckt. Bevorzugt wird die Auslassöffnung begrenzt durch zwei sich zumindest teilweise radial erstreckende erste Flächen und zwei sich schräg oder parallel zur Längsachse erstreckende zweite Flächen, wobei die beiden ersten Flächen in Längsrichtung und die beiden zweiten Flächen in Umfangsrichtung beabstandet sind.

Diese Ausgestaltung der Auslassöffnung ermöglicht einen aufgefächerten Strahl des Pulver-Luft Gemischs, der nicht direkt nach unten gerichtet ist. Obwohl also nur eine Auslassöffnung vorhanden ist, kann eine große Fläche des Zahns vom Pulver-Luft-Gemisch erreicht werden.

Bei einer bevorzugten Weiterbildung weist die dem ersten Längsabschnitt abgewandte erste Fläche mehrere Flächenbereiche auf, die in Längsrichtung versetzt angeordnet sind. Vorzugsweise sind drei in Umfangsrichtung aufeinanderfolgende Flächenbereiche vorgesehen, wobei der mittlere Flächenbereich in einer Radialebene liegt und in Längsrichtung gesehen näher am ersten Längsabschnitt liegt als die beiden anderen äußeren Flächenbereiche. Weiter bevorzugt sind die beiden äußeren Flächenbereiche spiegelsymmetrisch zu einer Längsebene und jeweils verrundet ausgebildet.

Das heißt mit anderen Worten, dass die erste Fläche, die gegenüber der anderen ersten Fläche stromabwärts liegt, mehrere Flächenbereiche aufweist, die in Längsrichtung gesehen versetzt angeordnet sind.

Damit ist es möglich, den Pulver-Luft-Gemischstrahl weiter aufzufächern, so dass er einen noch größeren Flächenbereich des Zahns erreicht.

Bei einer bevorzugten Weiterbildung ist im Bereich des inneren Kanals, der in die Auslassöffnung mündet, eine Ablenkfläche vorgesehen, die schräg zur Längsachse angeordnet ist, derart, dass das Pulver-Luft-Gemisch nach außen geführt wird. Bevorzugt geht die Ablenkfläche in den mittleren Flächenbereich der ersten Fläche über.

Diese spezielle Geometrie der Auslassöffnung verbessert zusätzlich den Pulver-Luft-Gemischstrahl.

Bei einer bevorzugten Weiterbildung weist der der erste Längsabschnitt am Übergang zu dem zweiten Längsabschnitt eine vorzugsweise in einer Radialebene liegende Ringfläche auf, in der die zumindest eine Öffnung für Wasser vorgesehen ist.

Das heißt mit anderen Worten, dass die Öffnung für Wasser an einer Fläche vorgesehen ist, die sich radial oder schräg zur Längsachse des zweiten Längsabschnitts erstreckt. Damit ist eine baulich sehr einfache Lösung für die Wasserzuführung hin zu der Mantelfläche und damit zu dem Wasserführungselement möglich.

Bei einer bevorzugten Weiterbildung ist das zumindest eine Wasserführungselement als rinnenförmige Ausnehmung in der Mantelfläche des zweiten Längsabschnitts ausgebildet. Vorzugsweise erstreckt sich zumindest eines der Wasserführungselemente bis in die unmittelbare Nähe der Auslassöffnung.

Diese Ausgestaltung hat den Vorteil, dass das Wasser in der rinnenförmigen Ausnehmung besser in Längsrichtung nach unten, d.h. in Richtung des stromabwärtigen Endes der Düsenspitze, geführt werden kann.

Besonders bevorzugt sind mehrere vorzugsweise sechs Wasserführungselemente vorgesehen, die mit mehreren, vorzugsweise sechs, Öffnungen für Wasser korrespondieren.

Bei einer bevorzugten Weiterbildung weist der der innere Kanal zumindest abschnittsweise einen rechteckförmigen, vorzugsweise quadratischen Querschnitt auf.

Bei einer bevorzugten Weiterbildung weist die Verbindungsschnittstelle zumindest ein Halteelement auf, das ausgelegt ist, mit entsprechenden Halteelementen, vorzugsweise Rastnasen, an dem Pulverstrahlgerät haltend zusammenzuwirken, so dass ein Abfallen der Düsenspitze vom Pulverstrahlgerät verhindert wird.

Das heißt mit anderen Worten, dass das Halteelement gerade dann Wirkung entfaltet, wenn sich die Düsenspitze vom Pulverstrahlgerät löst. Das Halteelement verhindert, dass die Düsenspitze vollständig vom Pulverstrahlgerät abfällt, was beim Einsatz im Mundraum eines Patienten zu unangenehmen Folgen führen könnte.

Bei einer bevorzugten Weiterbildung ist das Halteelement als Garantiering ausgebildet, der eine Sollbruchstelle aufweist, so dass beim Lösen der Düsenspitze vom Pulverstrahlgerät der Garantiering an der Sollbruchstelle aufbricht.

Das heißt mit anderen Worten, dass die Düsenspitze nur vom Pulverstrahlgerät vollkommen gelöst werden kann, wenn das Halteelement beschädigt wird. Durch das Vorsehen einer Sollbruchstelle ist es für den Anwender ohne große Kraftanstrengung möglich, die Düsenspitze vollständig abzuziehen.

Der Garantiering ermöglicht nun dem Anwender, sofort zu erkennen, ob die Düsenspitze bereits zuvor verwendet wurde.

In einer bevorzugten Weiterbildung ist der Garantiering an einem Ende des ersten Längsabschnitts angeordnet und über einen in Längsrichtung verlaufenden Steg mit dem folgenden Abschnitt des ersten Längsabschnitts verbunden. Weiter bevorzugt sind an dem folgenden Abschnitt mehrere Abstützelemente vorgesehen, die ausgebildet sind, den Garantiering beim Aufschieben über die Rastnasen abzustützen.

Diese Maßnahmen haben sich als besonders vorteilhaft herausgestellt. Der Garantiering wird über die Abstützelemente mitgeführt, obgleich der Garantiering an einem Steg, das heißt in Umfangsrichtung gesehen, nur an einem Abschnitt, mit dem folgenden Abschnitt verbunden ist.

Bei einer bevorzugten Weiterbildung ist am ersten Längsabschnitt ein Orientierungselement vorgesehen, das in einem vorgegebenen räumlichen Bezug zu der Auslassöffnung vorgesehen ist.

Diese Maßnahme hat den Vorteil, dass der Benutzer über dieses Orientierungselement einfach erfassen kann, wo sich die Auslassöffnung befindet, was gerade dann erforderlich ist, wenn die Auslassöffnung für den Benutzer nicht näher oder nur schwer zu erkennen ist.

Bei einer bevorzugten Weiterbildung ist am zweiten Längsabschnitt an der Außenseite eine Skala, insbesondere eine WHO-Sonden Skala, zur Ermittlung der Tiefe einer Zahnfleischtasche vorgesehen.

Der Vorteil dieser Maßnahme liegt darin, dass der Benutzer eine gute Orientierung beim Arbeiten durch diese Markierung erhält. Die Verwendung einer sog. WHO-Skalierung ist weiter von Vorteil, da diese Skalierung bereits bei anderen Dentalinstrumenten, beispielsweise Parodontalsonden, zum Einsatz kommt. Der Benutzer muss sich also nicht auf eine neue Skalierung einstellen.

Bei einer bevorzugten Weiterbildung ist die Verbindungsschnittstelle als sogenannter Bajonettverschluß ausgebildet.

D.h. mit anderen Worten, dass die Düsenspitze zunächst in eine Öffnung des Anschlussbereichs des Pulverstrahlgeräts eingesteckt und anschließend gedreht wird. Durch das Drehen der Düsenspitze relativ zum Pulverstrahlgerät wird sie in den den Anschlussbereich gezogen und damit dichtend mit dem Pulverstrahlgerät verbunden. Zum Lösen der Düsenspitze ist lediglich eine Drehung in entgegengesetzter Richtung erfoderlich.

Diese Lösung hat den Vorteil, dass eine sichere und für den Benutzer spürbare Verbindung ermöglicht wird. Durch Erreichen eines Endanschlags beim Eindrehen der Düsenspitze kann der Benutzer erkennen, dass die Düsenspitze sicher verbunden ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und beiliegenden Zeichnung. Dabei zeigen:
Fig. 1 eine schematische Darstellung eines Pulverstrahlgeräts mit einer aufgesteckten auswechselbaren Düsenspitze;
Fig. 2 eine schematische Seitendarstellung einer auswechselbaren Düsenspitze;
Figs. 3a - d verschiedene Darstellungen der in Fig. 2 gezeigten Düsenspitze;
Figs. 4a, b jeweils eine Detailansicht der Düsenspitze im Bereich der Auslassöffnung aus zwei unterschiedlichen Perspektiven;
Figs. 5a, b die in Fig. 2 gezeigte Düsenspitze in einem Längsschnitt sowie eine Detailansicht im Bereich der Auslassöffnung;
Fig. 6 die Düsenspitze von Fig. 2 zur Verdeutlichung einer aufgebrachten Skalierung;
Fig. 7 eine perspektivische Darstellung der Düsenspitze von Fig. 2 zur Verdeutlichung des inneren Kanals;
Figs. 8a- c verschiedene Darstellungen einer alternativen Ausgestaltung der Auslassöffnung;
Figs. 9a -c verschiedene Darstellungen zur Verdeutlichung des Zusammenspiels zwischen Düsenspitze und Pulverstrahlgerät,
Fig. 10a, b zwei schematische Längsschnitt-Darstellungen der Düsenspitze, die auf das Ende einer Pulverstrahlgeräts aufgesteckt ist,
Fig. 11a-c drei schematische Darstellungen zur Verdeutlichung einer alternativen Ausgestaltung der Verbindung zwischen Düsenspitze und Pulverstrahlgerät; und
Fig. 12 eine schematische Längsschnittdarstellung der Verbindung gemäß Fig. 11.

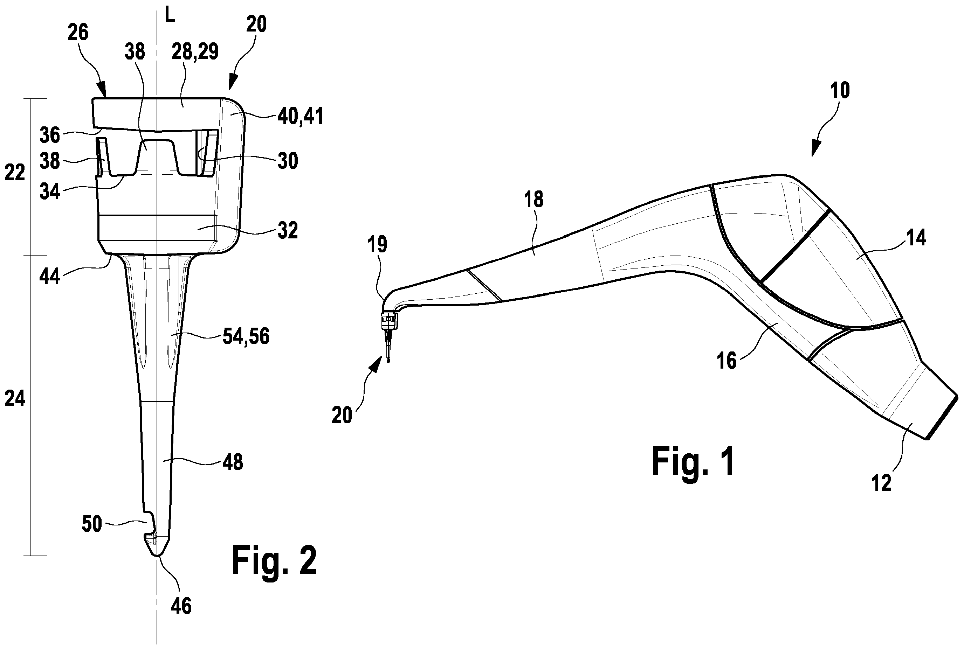

In Figur 1 ist ein Pulverstrahlgerät schematisch dargestellt und mit dem Bezugszeichen 10 gekennzeichnet. Ein solches Pulverstrahlgerät 10 wird im Dentalbereich zur Reinigung von Zähnen eingesetzt. Die Reinigung erfolgt mit einem, vorzugsweise feinkörnigen Pulver, das mit Luft vermischt wird und auf den zu reinigenden Zahn als Pulver-Luft Gemisch gestrahlt wird. Zum Abführen des Pulvers und zur Reduzierung der Staubentwicklung wird Wasser verwendet, das ebenfalls über das Pulverstrahlgerät 10 an den zu reinigenden Zahn gebracht wird.

Üblicherweise wird das Pulverstrahlgerät 10 an einen Medienschlauch eines Behandlungsstuhls angeschlossen, wobei das Pulverstrahlgerät 10 hierfür eine Anschlusskupplung 12 aufweist. Diese Anschlusskupplung 12 ermöglicht den Anschluss eines Medienschlauches, der dem Pulverstrahlgerät 10 Luft, Wasser und gegebenenfalls elektrische Energie zuführt.

Das Pulverstrahlgerät 10 besitzt ferner einen Behälter 14, der das für die Reinigung erforderliche Pulver aufnimmt. Aus diesem Behälter 14 wird das Pulver der zugeführten Luft, bspw. Druckluft, beigemischt, sodass ein Pulver-Luft Gemisch entsteht, das über einen inneren Kanal im Pulverstrahlgerät 10 zu einer aufgesetzten Düsenspitze 20 geführt wird. An dieser Düsenspitze 20 tritt dieses Pulver-Luft Gemisch aus, wobei auf die spezielle Ausgestaltung dieser Düsenspitze 20 später im Detail eingegangen wird.

Auch das zugeführte Wasser wird über einen inneren Kanal durch das Pulverstrahlgerät 10 hindurch geführt, sodass es über die Düsenspitze 20 austreten kann.

Das Pulverstrahlgerät 10 ist als Handgerät ausgebildet und besitzt, wie in Figur 1 zu erkennen ist, eine L-förmige Ausgestaltung, mit einem ersten Abschnitt 16, in dem die Anschlusskupplung 12 und der Behälter 14 liegt, und einem zweiten Abschnitt 18, an dessen Ende 19 die Düsenspitze 20 aufgesteckt werden kann.

Das gezeigte Pulverstrahlgerät 10 lässt sich sowohl für eine supragingivale Behandlung eines Zahns, d. h. eine Behandlung oberhalb des Zahnfleischsaumes, sowie eine subgingivale Behandlung eines Zahns, d. h. unterhalb des Zahnfleischsaumes, einsetzen. Je nach Behandlungsart können hierfür unterschiedlich ausgestaltete Enden 19 für eine supragingivale Behandlung (d.h. das Pulverstrahlgerät wird ohne Einsatz einer Düsenspitze verwendet) und Düsenspitzen 20 für eine supgingivale Behandlung verwendet werden. Nachfolgend wird eine Düsenspitze 20 beschrieben, die für die subgingivale Behandlung ausgelegt ist. D. h. mit anderen Worten, dass die Düsenspitze 20 hinsichtlich ihrer Abmessungen so ausgelegt ist, dass sie in Zahnfleischtaschen eintauchen kann. Die Düsenspitze 20 selbst ist als Einwegartikel ausgelegt, sodass die Düsenspitze 20 nach ihrer ersten Verwendung weggeworfen wird.

In Figur 2 ist nun eine solche Düsenspitze 20 schematisch in einer Seitenansicht dargestellt. Die Düsenspitze 20 besitzt eine längliche Form mit einer Längsachse L und gliedert sich in einen ersten Längsabschnitt 22 und einen sich daran anschließenden zweiten Längsabschnitt 24. Im ersten Längsabschnitt 22 ist eine Verbindungsschnittstelle 26 vorgesehen, die mit einer entsprechend ausgebildeten Schnittstelle am Ende 19 des zweiten Abschnitt 18 des Pulverstrahlgeräts 10 zusammen wirkt. Die Verbindungsschnittstelle 26 sorgt insbesondere dafür, dass sowohl das Pulver-Luft Gemisch als auch Wasser in die Düsenspitze gelangen kann, ohne dass es zu einer Leckage führt.

Die Verbindungsschnittstelle 26 umfasst einen Ring 28, der als Garantiering 29 wirkt, was nachfolgend noch erläutert werden wird. Der Ring 28, der das obere Ende der Düsenspitze 20 bildet ("obere" bezeichnet nachfolgend jenen Bereich, der im aufgesteckten Zustand der Düsenspitze dem Ende des zweiten Abschnitts des Pulverstrahlgeräts 10 benachbart ist), ist über einen Steg 30 mit einem zylindrischen Bereich 32 verbunden. Dadurch ist ein oberer Rand 34 des zylindrischen Bereichs 32 beabstandet zu einer Unterseite 36 des Rings 28.

Am oberen Rand 34 sind mehrere, vorzugsweise drei Abstützelemente 38 vorgesehen, die sich in Richtung der Unterseite 36 des Rings 28 erstrecken und mit geringem Abstand zu der Unterseite 36 enden. Die Abstützelemente 38 sind entlang des vorzugsweise kreisförmigen Rands 34, vorzugsweise gleichmäßig verteilt. Die Abstützelemente 38 haben die Funktion, den Ring 28 abzustützen, sollte er in Richtung des oberen Rand 34 gebogen werden.

In Figur 2 ist noch zu erkennen, dass sich ein fahnenförmiges Elemente 40 über die gesamte Länge des ersten Längsabschnitts 22 erstreckt und radial nach außen verläuft. Dieses fahnenförmige Element 40 dient als optisches Orientierungs- bzw. Ausrichtungselement 41, um den Anschluss an das Pulverstrahlgerät 10 in einer bestimmten Position vornehmen und überprüfen zu können. Insbesondere soll der Benutzer anhand des Ausrichtungselements 41 einfach auf die Ausrichtung der Auslassöffnung schließen können. Das Ausrichtungselement 41 muss folglich in einem definierten räumlichen Verhältnis zur Auslassöffnung 50 platziert sein.

Der zweite Längsabschnitt 24 der Düsenspitze 20 ist ebenfalls zylindrisch ausgebildet, wobei der Durchmesser jedoch geringer ist als jener des zylindrischen Bereichs 32. Somit entsteht am Übergang zwischen dem ersten Längsabschnitt 22 und dem zweiten Längsabschnitt 24 eine Ringfläche 44, die im wesentlichen senkrecht zu der Längsachse L verläuft.

Der zweite Längsabschnitt 24 weist zumindest abschnittsweise einen kreisförmigen Querschnitt auf, dessen Radius sich nach unten, d. h. in Richtung eines unteren Endes 46 der Düsenspitze 20 reduziert. Mit "unteren Ende" der Düsenspitze 20 ist hier jenes Ende gemeint, dass dem Ring 28 gegenüberliegt und im auf das Pulverstrahlgerät 10 aufgesteckten Zustand das diesem abgewandte Ende bildet.

Im Bereich des unteren Endes 46 ist an einer Mantelfläche 48 des zweiten Längsabschnitts 24 eine Auslassöffnung 50 vorgesehen, aus der das Pulver-Luft Gemisch austreten kann. Der Ausschnitt in der Mantelfläche überspannt dabei in Umfangsrichtung gesehen einen Bereich von mindestens 90° (ein Viertel des Umfangs), vorzugsweise bis zu 180° (die Hälfte des Umfangs). An dieser Stelle sei noch angemerkt, dass der zweite Längsabschnitt 24 am unteren Ende 46 geschlossen ist, sodass das Pulver-Luft Gemisch nur schräg bzw. senkrecht zur Längsachse, also nicht in Richtung der Längsachse austritt. Die Auslassöffnung 50 in der Mantelfläche 48 ist die einzige Öffnung für das Pulver-Luft Gemisch im zweiten Längsabschnitt 24. Der Durchmesser des zweiten Längsabschnitts im Bereich der Auslassöffnung 50 liegt vorzugsweise im Bereich von 1,0 bis 1,4 mm, vorzugsweise 1,1mm.

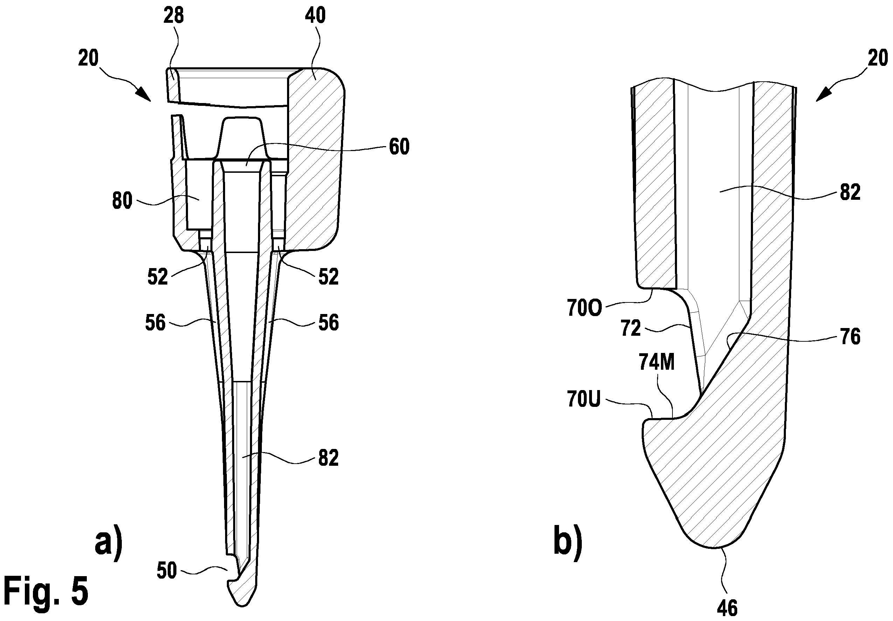

Das Pulver-Luft Gemisch gelangt von der Verbindungsschnittstelle 26 zu der Auslassöffnung 50 über einen inneren Kanal 82 (vgl. Fig. 5a), der sich vorzugsweise konzentrisch durch den zweiten Längsabschnitt 24 erstreckt und in die Auslassöffnung 50 mündet.

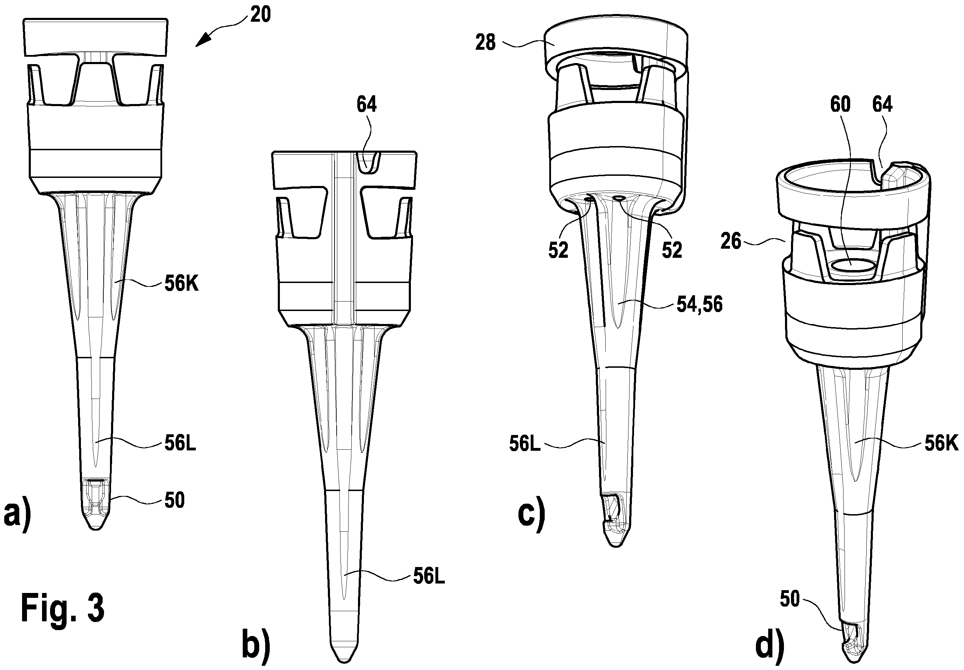

Wie zuvor bereits erwähnt, wird bei der Behandlung auch Wasser über die Düsenspitze 20 zugeführt, um das Pulver beispielsweise aus der Zahnfleischtasche auszuspülen und um eine Staubentwicklung zu vermeiden. Zur Zuführung von Wasser sind in der Ringfläche 44 mehrere Wasseröffnungen 52 vorgesehen, wie beispielsweise in Figur 3c zu erkennen ist. So können beispielsweise sechs solcher Wasseröffnungen 52 in der Ringfläche 44 gleichmäßig beabstandet zueinander vorgesehen sein. Die Wasseröffnungen 52 sind dabei so nahe an der Mantelfläche 48 des zweiten Längsabschnitts 24 vorgesehen, dass das austretende Wasser an der Mantelfläche nach unten in Richtung des unteren Endes 46 laufen kann, wobei der sogenannte Coanda-Effekt hierbei ausgenutzt wird. Die Mantelfläche 48 dient somit auch als Wasserführungselement.

Um eine bessere Wasserführung bereitzustellen, sind jedoch an der Mantelfläche 48 speziell ausgebildete Wasserführungselemente 54 vorgesehen, die beispielsweise als rinnenförmige Elemente 56 ausgelegt sind. Diese rinnenförmige Elemente 56 erstrecken sich in Längsrichtung nach unten, d. h. in Richtung des unteren Endes 46, wobei die Länge der einzelnen rinnenförmigen Elemente 56 unterschiedlich sein kann. Wie sich aus den Figuren 3a bis d ergibt, sind in Umfangsrichtung der Mantelfläche 48 abwechselnd lange rinnenförmige Elemente 56L und kurze rinnenförmige Elemente 56K vorgesehen. Eines der rinnenförmigen Elemente 56L endet kurz oberhalb des oberen Endes der Auslassöffnung 50, wie dies in Figur 3a gut zu erkennen ist.

Da die Wasserführung über die Mantelfläche 48 erfolgt, kommt der zweite Längsabschnitt 24 mit einem einzigen inneren Kanal für das Pulver-Luft Gemisch aus, sodass der Querschnitt dieses Längsabschnitts 24 entsprechend gering (im Vergleich zu einer Lösung mit zwei inneren Kanälen) ausgebildet sein kann. Entsprechend kleine Abmessungen des zweiten Längsabschnitts 24 erleichtern das Eintauchen in eine Zahnfleischtasche und führen bedingt durch den kreisförmigen Querschnitt auch zu einer Flexibilität, die in alle Richtungen gleich ist (im Vergleich zu rechteckigen oder ovalen Querschnitten, die keine gleichmäßige Flexibilität in alle Richtungen bieten).

Die rinnenförmigen Elemente 56 selbst beginnen im unmittelbaren Bereich der Ringfläche 44 und sind zu den Wasseröffnungen 52 ausgerichtet. D. h. mit anderen Worten, dass die Längsachse eines rinnenförmigen Elements 56 und der Mittelpunkt der vorzugsweise kreisförmigen Wasseröffnung 52 in der gleichen Längsebene liegen.

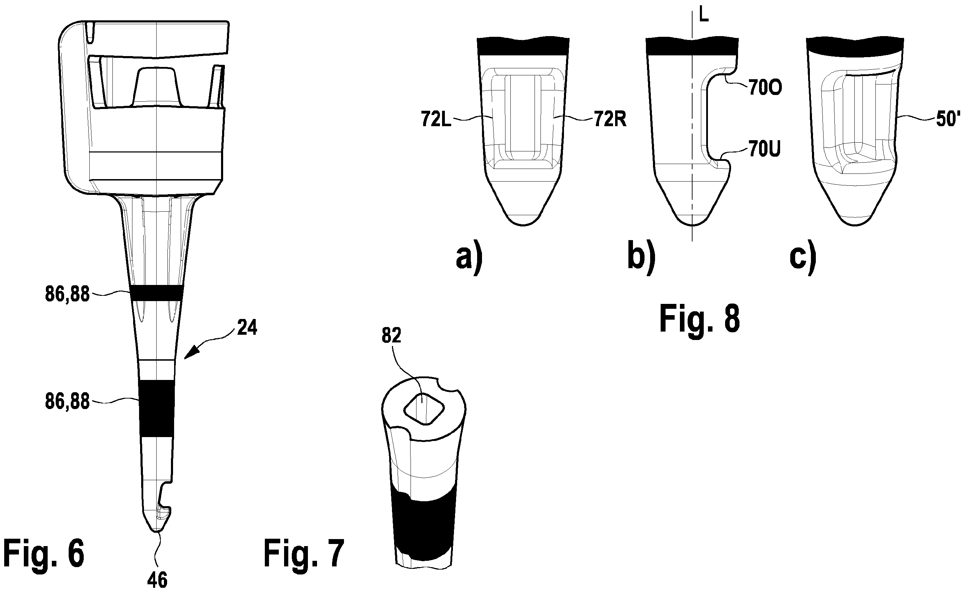

Aus Figur 3d wird ersichtlich, dass die Verbindungsschnittstelle 26 eine vorzugsweise kreisförmige Öffnung 60 koaxial zu der Längsachse L aufweist, die das obere Ende des inneren Kanals 82 darstellt. Der Öffnungsquerschnitt der Öffnung 60 ist dabei größer als der Öffnungsquerschnitt der Auslassöffnung 50, sodass eine Düsenwirkung, d. h. eine Beschleunigung des Pulver-Luft Gemisches nach unten hin zur Auslassöffnung 50 durch den sich verringernden Strömungsquerschnitt erreicht wird. Der innere Kanal 82, wie er in Figur 7 gezeigt ist, kann zumindest abschnittsweise eine rechteckige oder quadratische Form aufweisen.

Wie erwähnt bildet der Ring 28 das obere Ende der Düsenspitze 20. Dieser Ring 28 weist eine Kerbe 64 auf, wie dies in den Figuren 3b und d gut zu erkennen ist. Diese Kerbe 64 im Ring 28 dient als Materialschwächung und damit als Sollbruchstelle, an der der Ring 28 aufreißen kann. Die Möglichkeit des Aufreißens dient zur Bereitstellung einer Garantiefunktion des Rings 28. Beim Abziehen der Düsenspitze 20 vom Pulverstrahlgeräts 10 soll der Ring nämlich an dieser Sollbruchstelle aufrei-ßen, sodass der Benutzer einfach erkennen kann, ob die Düsenspitze 20 unbenutzt ist oder nicht.

Innerhalb des zylindrischen Bereichs 32 befindet sich ein Ringraum oberhalb der Ringfläche 44, der mit den Wasseröffnungen 52 in Verbindung steht. Dieser Ringraum wird über einen Kanal, der in eine Öffnung in der Verbindungsschnittstelle 26 mündet mit Wasser versorgt.

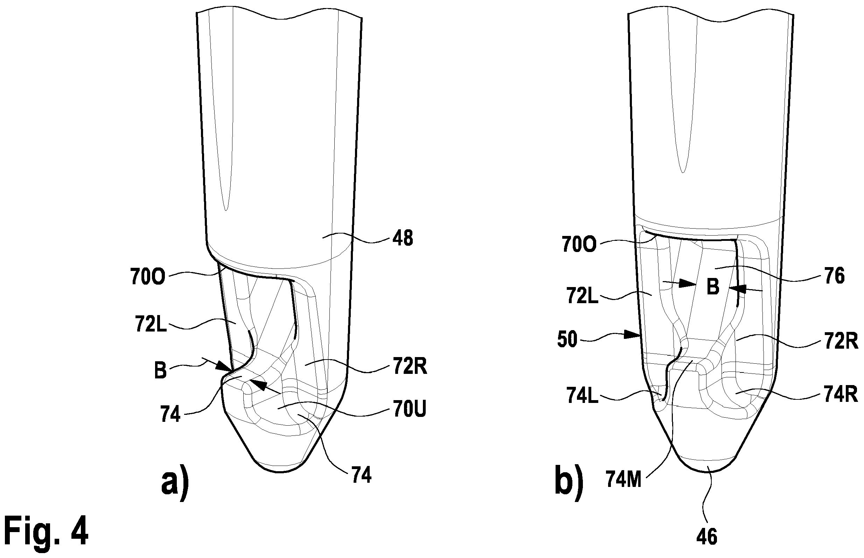

Eine der Besonderheiten der Düsenspitze 20 ist in der Ausgestaltung der Auslassöffnung 50 zu sehen. Diese Ausgestaltung wird nachfolgend mit Bezug auf die Figur 4a, b näher erläutert.

Die Auslassöffnung 50 ist als Ausschnitt in der Mantelfläche 48 bereitgestellt, mit einer Ausdehnung in Umfangsrichtung von nahezu 180°, so dass sich ein Öffnungswinkel von vorzugsweise ca. 130° ergibt, und in Längsrichtung von vorzugsweise etwa 0,9mm bis 1,3mm. Die Auslassöffnung 50 in der Mantelfläche 48 wird durch mehrere Flächen begrenzt, nämlich eine obere und eine untere erste Fläche, 700, 70U und eine linke und eine rechte zweite Fläche 72L, 72R. Mit den Bezeichnungen "untere "und "obere "ist dabei das Verhältnis zum unteren Ende 46 gemeint, d. h. die untere Fläche liegt näher an dem unteren Ende 46, als die obere Fläche.

Die beiden zweiten Flächen 72L, 72R liegen bevorzugt in einer Ebene, die sich schräg zur Längsachse L erstreckt. Die Schräge ist dabei so gewählt, dass der obere Bereich der zweiten Flächen einen größeren Abstand zur Längsachse aufweist als der untere Bereich der zweiten Flächen.

Wie sich insbesondere aus Figur 5a,b ergibt, erstreckt sich die obere erste Fläche im wesentlichen senkrecht zur Längsachse L.

Die untere erste Fläche ist in drei Flächenbereiche 74 aufgeteilt, nämlich einen linken Flächenbereich 74L, einen mittleren Flächenbereich 74M und einen rechten Flächenbereiche 74R. Wie sich aus Figur 4 gut ergibt, liegt der mittlere Flächenbereich 74M oberhalb der beiden benachbarten Flächenbereiche 74L, 74R, d. h. der mittlere Flächenbereich 74M besitzt einen größeren Längsabstand zum unteren Ende 46 als die beiden anderen Flächenbereiche 74L, 74R. Der mittlere Flächenbereich 74M erstreckt sich zumindest abschnittsweise senkrecht zur Längsachse L. Darüber hinaus ist zu erkennen, dass die Breite B des mittleren Flächenbereich 74M in etwa der Breite des inneren Kanals 82 entspricht. Die Ausdehnung der Auslassöffnung in Längsrichtung beträgt im Bereich des mittleren Flächenbereichs 74M vorzugsweise 0,9mm und im Bereich der beiden anderen Flächenbereiche 74L, 74R vorzugsweise 1,3mm.

Aus der Darstellung in Figur 4 ist ferner ersichtlich, dass innerhalb des inneren Kanals 82 im Einmündungsbereich zu der Auslassöffnung 50 eine schräg zur Längsachse verlaufende Ablenkfläche 76 vorgesehen ist, die vorzugsweise im Winkel von etwa 45° zur Längsachse und damit auch zur Strömungsrichtung des Pulver-Luft Gemisches liegt. Die Ablenkfläche 76 geht in ihrem unteren Bereich über in die mittlere Fläche 74M. D. h. auch, dass die Breite dieser Ablenkfläche 76 etwa der Breite des mittleren Flächenbereich 74M entspricht. Diese Ablenkfläche 76 dient dazu, das Pulver-Luft Gemisch in etwa radial zur Längsachse nach außen abzulenken.

An dieser Stelle sei noch angemerkt, dass die Übergänge zwischen den Flächen bzw. auch Flächenbereiche abgerundet sind, sodass weichere Übergänge vorhanden sind, was aus strömungstechnischer Sicht vorteilhaft ist.

Die Geometrie der Auslassöffnung 50 ermöglicht einen zu beiden Seiten (links und rechts) stark aufgefächerten Strahl eines Pulver-Luft Gemisches, wobei gleichzeitig verhindert wird, dass die Strahlwirkung nach unten, d. h. zum unteren Ende 46 hin, zu groß wird. Gerade der mittlere Flächenbereich 74M, der eine Art Rippe bildet, und die beiden seitlichen Flächenbereiche 74L und 74R, die quasi als Schanzen wirken, ermöglichen den sehr breit aufgefächerten Strahl eines Pulver-Luft Gemisches, sodass eine relativ große Fläche am zur behandelnden Zahn erreicht werden kann.

In Figur 5a, b ist die Düsenspitze 20 in einem Längsschnitt dargestellt. In diesem Längsschnitt in Figur 5a ist zum einen der bereits erwähnte Ringraum im ersten Längsabschnitt zu erkennen, der mit dem Bezugszeichen 80 gekennzeichnet ist. Ferner ist der innere Kanal dargestellt, und mit dem Bezugszeichen 82 gekennzeichnet, der sich von der Öffnung 60 bis zur Auslass Öffnung 50 erstreckt. In der Detailansicht in Figur 5b ist deutlich zu erkennen, dass sich die obere erste Fläche 70O und der mittlere Flächenbereich 74M der unteren ersten Fläche 70U im Wesentlichen parallel zueinander erstrecken. Die Ablenkfläche 76 geht dabei in den mittleren Flächenbereich 74M über.

Darüber hinaus ist aus Figur 5 wie auch den Figuren 4a,b ersichtlich, dass das untere Ende 46 kalottenförmig, insbesondere kugelkalottenförmig ausgebildet ist.

In Figur 6 ist eine Düsenspitze 20 abgebildet, die der zuvor beschriebenen Düsenspitze 20 entspricht, allerdings zusätzlich eine Markierung 86 im Bereich des zweiten Längsabschnitts 24 aufweist. Die Markierung 86 weist ein oder mehrere Markierungselemente 88 in Form von optisch erkennbaren in Umfangsrichtung verlaufenden Streifen auf, die einen definierten Abstand zum unteren Ende 46 aufweisen. Die Markierung 86 und insbesondere die Markierungselemente 88 sollen dem Benutzer optisch anzeigen, wie tief die Düsenspitze bereits in einer Zahnfleischtasche eingetaucht ist. Bevorzugt wird die Markierung 86 so gewählt, wie sie bei sogenannten Parodontosemetern (WHO-Sonde) bekannt ist.

In Figur 8 ist eine alternative Ausgestaltung einer Auslassöffnung dargestellt und mit dem Bezugszeichen 50' gekennzeichnet. Diese Auslassöffnung 50'unterscheidet sich gegenüber der zuvor beschriebenen Auslassöffnung 50 darin, dass die untere erste Fläche 70U nur einen Flächenbereich statt der zuvor beschriebenen drei Flächenbereiche aufweist. Die in Figur 8 gezeigte Ausgestaltung verfügt folglich nicht über einen rippenartigen mittleren Flächenbereich. Wie die zuvor beschriebene Auslassöffnung 50 besitzt auch diese alternative Ausgestaltung einen Öffnungsbereich in horizontaler Richtung von nahezu 180 Grad. Die Ablenkfläche 76 erstreckt sich hier radial zur Längsachse L.

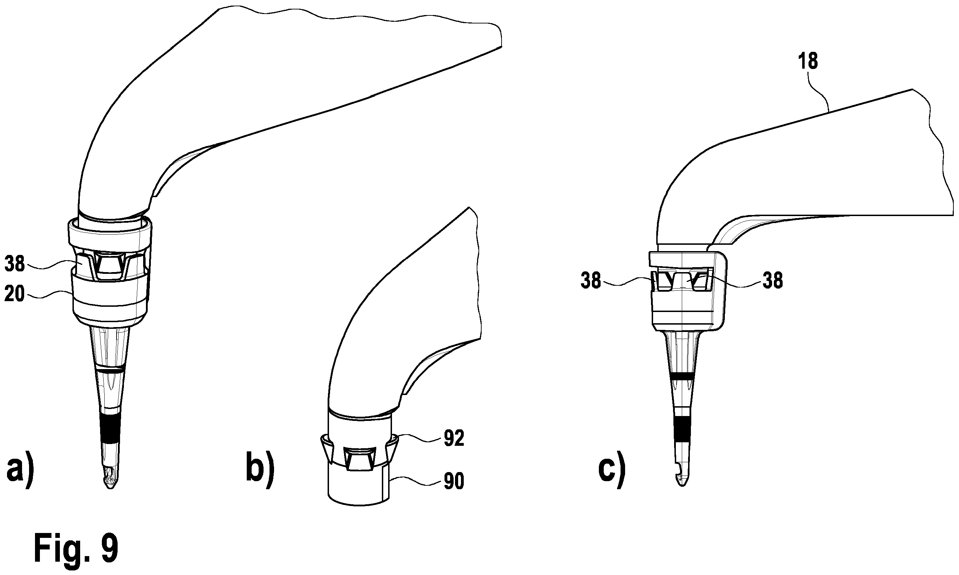

In Figur 9 ist in den drei schematischen Zeichnungen das Zusammenspiel zwischen der Düsenspitze 20 und dem Anschlussbereich des Pulverstrahlgeräts 10, der mit dem Bezugszeichen 90 gekennzeichnet ist, dargestellt. Der Anschlussbereich 90 am Ende des zweiten Abschnitts 18 des Pulverstrahlgeräts 10 weist Halteelemente, bspw. Rastnasen 92 auf, wobei vorzugsweise vier Rastnasen 92 gleichmäßig verteilt in Umfangsrichtung vorgesehen sind. Die Rastnasen 92 besitzen jeweils eine schräg zur Umfangsfläche verlaufende Fläche und eine senkrecht zur Umfangsfläche verlaufende Fläche. Die senkrechte Fläche, d. h. die Rastfläche, liegt hierbei im oberen Bereich, d. h. sie ist weiter entfernt von dem Ende des zweiten Abschnitts 18 als die jeweilige schräge Fläche.

Beim Aufstecken der Düsenspitze 20 gleitet nun der Ring 28 über die schrägen Flächen der Rastnasen 92, wobei sich der Ring dabei etwas ausdehnt, ohne jedoch an der Sollbruchstelle aufzureißen. Um ein gleichmäßiges Gleiten über die schrägen Flächen zu ermöglichen, sind die Abstützelemente 38 vorgesehen, die den Ring 28 gegen eine zu starke Ablenkung nach unten abstützen.

Der Ring 28 hat nun einerseits die Funktion, ein Abfallen der Düsenspitze 20 während der Verwendung zu verhindern. Selbst wenn die über Dichtflächen zwischen dem Anschlussbereich 90 und der Verbindungsschnittstelle 26 vorhandene Klemmung verloren ginge, kann der Ring 28 ohne zusätzlichen manuellen Kraftaufwand nicht über die Rastnasen 92 hinweg laufen. Vielmehr bleibt die Düsenspitze 20 dann über den Ring 28 am Anschlussbereich 90 hängen.

Soll die Düsenspitze 20 vom Anschlussbereich 90 des Pulverstrahlgeräts 10 abgezogen werden, muss der Benutzer Kraft aufbringen, um den Ring 28 an der Sollbruchstelle 64 aufzureißen. An diesem aufgerissenen Ring, der dann die Funktion eines Garantierings 29 hat, ist zu erkennen, dass die Düsenspitze bereits im Einsatz war.

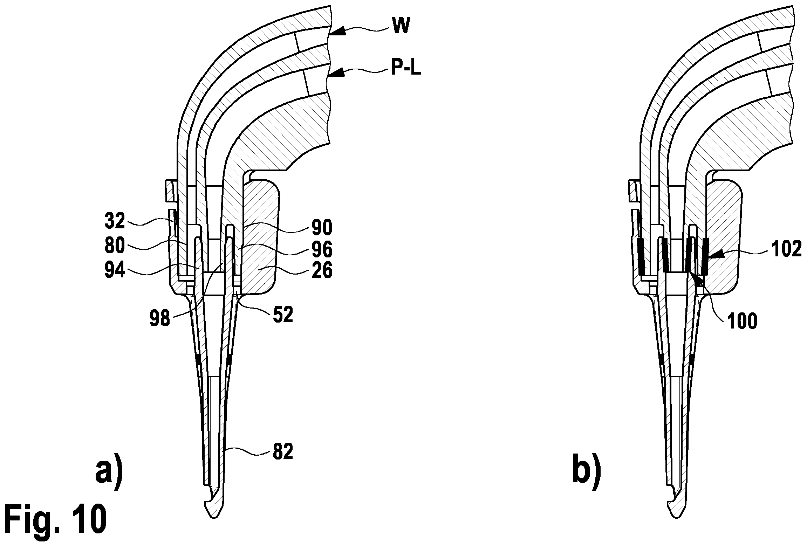

In Figuren 10a, b ist in einem Längsschnitt die Verbindung zwischen einer Düsenspitze 20 und dem Anschlussbereich 90 des Pulverstrahlgeräts dargestellt. Hier ist zu erkennen, dass die Verbindungsschnittstelle 26 einen zylindrischen Abschnitt 94 aufweist, der den Innenraum des zylindrischen Bereichs 32 in einen äußeren Ringraum 96 und einen inneren Raum 98 aufteilt. Der Anschlussbereich 90 ist nun so ausgebildet, dass er in den Ringraum 96 und den inneren Raum 98 eintauchen kann und dort dann mit den entsprechenden Mantelflächen des zylindrischen Bereichs 32 dichtend zusammen wirkt. So ist beispielsweise an der Innenseite des zylindrischen Abschnitts 94 eine Dichtung 100 vorgesehen, und zwischen der Mantelfläche des Anschlussbereich 90 und der inneren Mantelfläche des zylindrischen Bereichs 32 ist ebenfalls eine Dichtung 102 vorgesehen. Das Pulver Luft Gemisch strömt dabei über einen Kanal im Pulverstrahlgerät 10 in den inneren Raum 98, während Wasser über einen zweiten Kanal im Pulverstrahlgerät 10 in den Ringraum 96 gelangt. Durch die vorgesehenen Dichtungen kann Wasser nur über die vorgesehenen Wasseröffnungen 52 austreten und das Pulver-Luft Gemisch gelangt Dank der Dichtung 100, nicht in den Bereich des Ringraums 96. Wie bereits zuvor kurz angedeutet, wird die Düsenspitze 20 am Anschlussbereich 90 des Pulverstrahlgeräts 10 über die entsprechende Klemmung und den Reibschluss durch die Dichtungen 100,102 gehalten.

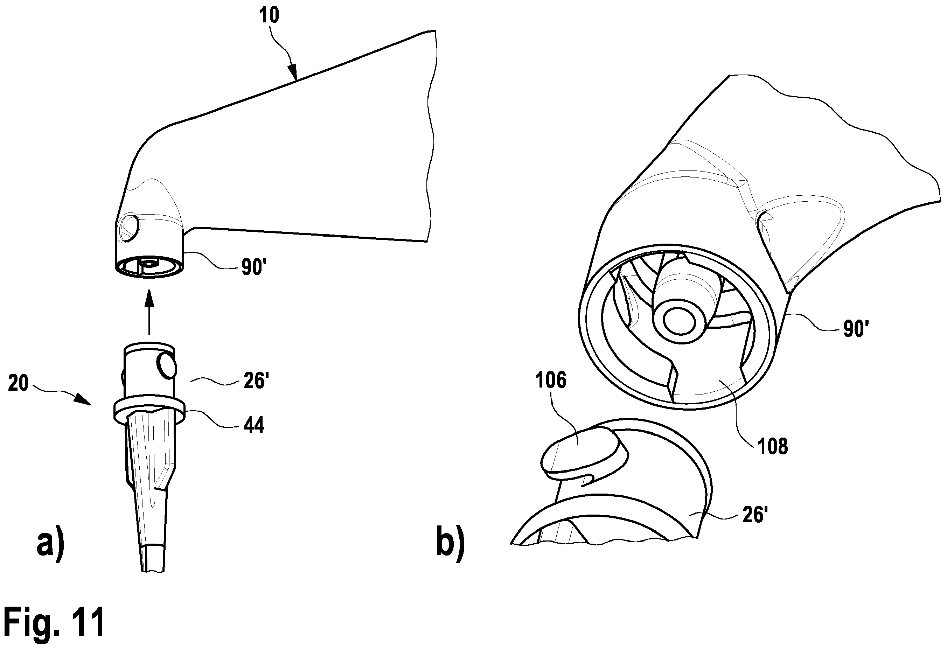

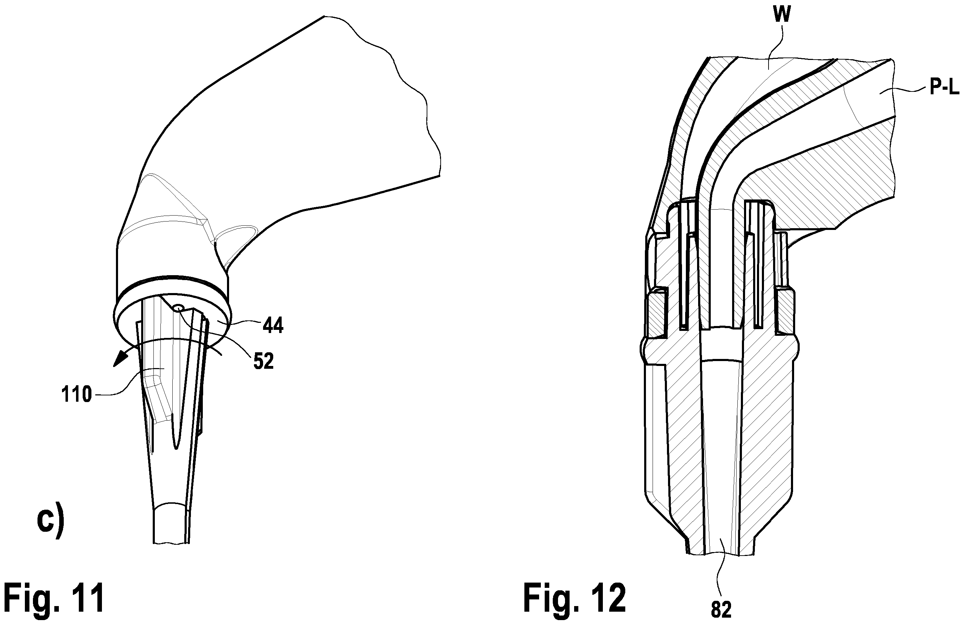

In Figur 11 ist eine Düsenspitze 20 schematisch dargestellt, die über eine Alternative Verbindungsschnittstelle 26' verfügt. Entsprechend angepasst ist auch der Anschlussbereich 90' des Pulverstrahlgeräts 10. Die Verbindungschnittstelle 26' verfügt nicht mehr über einen Ring 28, der ein Abfallen der Düsenspitze verhindern soll. Stattdessen ist ein sogenannter Bajonettverschluss vorgesehen, wobei beispielsweise zwei Nocken 106 an der Verbindungsschnittstelle 26' mit einem Bajonettkurve 108, die an der Innenseite des Anschlussbereich 90' ausgebildet ist, zusammenwirken. Die Verbindungsschnittstelle 26' wird dabei zunächst in die Öffnung des Anschlussbereich 90' eingesteckt, wobei die Nocken 106 zu der Bajonettkurve 108 ausgerichtet sind. Anschließend wird die Düsenspitze 20 gedreht, wobei die Nocken 106 entlang der Bajonettkurve 108 laufen und damit die Düsenspitze 20 weiter nach oben ziehen, bis eine dichte Verbindung zwischen Düsenspitze und Anschlussbereich 90' hergestellt ist. Dies ist in Figur 12 dargestellt. In diesem Zustand sind die beiden Medienkanäle für Wasser und das Pulver-Luft Gemisch über entsprechende Dichtungen voneinander getrennt und können so den inneren Kanal, 82 bzw. die Wasseröffnungen 52 speisen.

Um das Drehen der Düsenspitze und damit ihr Befestigen am Anschlussbereich 90' zu erleichtern sind im zweiten Längsabschnitt 24 Griffelemente 110 vorgesehen, die sich radial nach außen erstrecken und eine gewisse Länge in Längsrichtung besitzen. Vorzugsweise sind zwei Griffelemente 110 auf gegenüberliegenden Seiten unterhalb der Ringfläche 44 vorgesehen.

Die zuvor erläuterten Düsenspitzen 20 sind aus einem Kunststoff hergestellt. Da der zweite Längsabschnitt 24 sehr schlank und im wesentlichen kreisförmig ausgebildet ist, kann generell ein Material verwendet werden, dass eine relativ gute Standzeit im Gebrauch aufweist, aber dennoch eine Flexibilität für ein angenehmes Arbeiten besitzt. Insbesondere im unteren Bereich des zweiten Längsabschnitts 24 und bevorzugt auch durch den rechteckförmigen bzw. quadratischen Querschnitt des inneren Kanals bleibt eine ausreichende Wandstärke zur Verfügung, die Flexibilität bietet aber ein Abknicken der Spitze verhindert.

Die beschriebene Düsenspitze 20 lässt sich kostengünstig herstellen, sodass ein kostengünstiges steriles Einmalprodukt bereitgestellt werden kann.

Die Erfindung und vorteilhafte Ausgestaltungen sind in den nachfolgenden Absätzen definiert.

Absatz 1. Auswechselbare Düsenspitze (20) für ein dentales Pulverstrahlgerät (10), mit einem länglichen Körper, der sich in einen ersten (22) und einen zweiten Längsabschnitt (24) gliedert, wobei der erste Längsabschnitt (22) eine Verbindungsschnittstelle (26) für ein lösbares Anbringen an dem Pulverstrahlgerät und der zweite Längsabschnitt (24) einen kreisförmigen Querschnitt mit einem inneren Kanal (82) für ein Pulver-Luft-Gemisch und einer äußeren Mantelfläche (48) aufweist, dadurch gekennzeichnet, dass an der Mantelfläche (48) des zweiten Längsabschnitts (24) zumindest ein sich in Längsrichtung erstreckendes Wasserführungselement (54) vorgesehen ist, eine einzige Auslassöffnung (50) für das Pulver-Luft Gemisch an der Mantelfläche (48) des zweiten Längsabschnitts (24) vorgesehen ist, in die der innere Kanal (82) mündet, und der erste Längsabschnitt (22) an seinem dem zweiten Längsabschnitt zugewandten Bereich zumindest eine Öffnung (52) für Wasser aufweist, wobei die zumindest eine Öffnung (52) in das zumindest eine Wasserführungselement (54) mündet.

Absatz 2. Düsenspitze nach Absatz 1, dadurch gekennzeichnet, dass die Auslassöffnung (50) einen Öffnungsbereich aufweist, der sich über zumindest ein Viertel, vorzugsweise die Hälfte des Umfangs des Längsabschnitts erstreckt.

Absatz 3. Düsenspitze nach Absatz 1 oder 2, dadurch gekennzeichnet, dass die Auslassöffnung begrenzt wird durch zwei sich zumindest teilweise radial erstreckende erste Flächen (70) und zwei sich schräg oder parallel zur Längsachse erstreckende zweite Flächen (72), wobei die beiden ersten Flächen (70) in Längsrichtung und die beiden zweiten Flächen (72) in Umfangsrichtung beabstandet sind.

Absatz 4. Düsenspitze nach Absatz 3, dadurch gekennzeichnet, dass die dem ersten Längsabschnitt abgewandte erste Fläche (70U) mehrere Flächenbereiche (74) aufweist, die in Längsrichtung versetzt angeordnet sind.

Absatz 5. Düsenspitze nach Absatz 4, dadurch gekennzeichnet, dass drei in Umfangsrichtung aufeinanderfolgende Flächenbereiche (74L,74M,74R) vorgesehen sind, wobei der mittlere Flächenbereich (74M) in einer Radialebene liegt und in Längsrichtung gesehen näher am ersten Längsabschnitt liegt als die beiden anderen äußeren Flächenbereiche (74L, 74R).

Absatz 6. Düsenspitze nach Absatz 4 oder 5, dadurch gekennzeichnet, dass die beiden äußeren Flächenbereiche (74L, 74R) spiegelsymmetrisch zu einer Längsebene und jeweils verrundet ausgebildet sind.

Absatz 7. Düsenspitze nach einem der vorhergehenden Absätze, dadurch gekennzeichnet, dass im Bereich des inneren Kanals (82), der in die Auslassöffnung (50) mündet, eine Ablenkfläche (76) vorgesehen ist, die schräg zur Längsachse (L) angeordnet ist, derart, dass das Pulver-Luft Gemisch nach Außen geführt wird.

Absatz 8. Düsenspitze nach Absatz 5 und 7, dadurch gekennzeichnet, dass die Ablenkfläche (76) in den mittleren Flächenbereich (74M) der ersten Fläche (72U) übergeht.

Absatz 9. Düsenspitze nach einem der vorhergehenden Absätze, dadurch gekennzeichnet, dass der erste Längsabschnitt am Übergang zu dem zweiten Längsabschnitt eine vorzugsweise in einer Radialebene liegende Ringfläche (44) aufweist, in der die zumindest eine Öffnung (52) für Wasser vorgesehen ist.

Absatz 10. Düsenspitze nach einem der vorhergehenden Absätze, dadurch gekennzeichnet, dass die Mantelfläche (48) als Wasserführungselement (54) dient.

Absatz 11. Düsenspitze nach einem der vorhergehenden Absätze, dadurch gekennzeichnet, dass das zumindest eine Wasserführungselement (54) als rinnenförmige Ausnehmung (56) in der Mantelfläche (48) des zweiten Längsabschnitts (24) ausgebildet ist.

Absatz 12. Düsenspitze nach Absatz 11, dadurch gekennzeichnet, dass zumindest eines der Wasserführungselemente (56) sich bis in die unmittelbare Nähe der Auslassöffnung erstreckt.

Absatz 13. Düsenspitze nach einem der vorhergehenden Absätze, dadurch gekennzeichnet, dass mehrere, vorzugsweise sechs Wasserführungselemente (56) und mehrere, vorzugsweise sechs Öffnungen (52) für Wasser vorgesehen sind.

Absatz 14. Düsenspitze nach einem der vorhergehenden Absätze, dadurch gekennzeichnet, dass der innere Kanal (82) zumindest abschnittsweise einen rechteckförmigen, Querschnitt aufweist.

Absatz 15. Düsenspitze nach einem der vorhergehenden Absätze, dadurch gekennzeichnet, dass die Verbindungsschnittstelle (26) zumindest ein Halteelement (28) aufweist, das ausgelegt ist, mit entsprechenden Halteelementen (92), vorzugsweise Rastnasen, an dem Pulverstrahlgerät haltend zusammenzuwirken, so dass ein Abfallen der Düsenspitze vom Pulverstrahlgerät verhindert wird.

Absatz 16. Düsenspitze nach Absatz 15, dadurch gekennzeichnet, dass das Halteelement (28) als Garantiering (29) ausgebildet ist, der eine Sollbruchstelle (64) aufweist, so dass beim Lösen der Düsenspitze vom Pulverstrahlgerät der Garantiering an der Sollbruchstelle aufbricht.

Absatz 17. Düsenspitze nach Absatz 16, dadurch gekennzeichnet, dass der Garantiering (29) an einem Ende des ersten Längsabschnitts angeordnet ist und über einen in Längsrichtung verlaufenden Steg (30) mit dem folgenden Abschnitt des ersten Längsabschnitts verbunden ist.

Absatz 18. Düsenspitze nach Absatz 17, dadurch gekennzeichnet, dass an dem folgenden Abschnitt mehrere Abstützelemente (38) vorgesehen sind, die ausgebildet sind, den Garantiering (29) beim Aufschieben über die Rastnasen (92) abzustützen.

Absatz 19. Düsenspitze nach einem der Absätze 1 bis 14, dadurch gekennzeichnet, dass die Verbindungsschnittstelle (26') als Bajonettverschluß (106) ausgebildet ist.

Absatz 20. Düsenspitze nach einem der vorhergehenden Absätze, dadurch gekennzeichnet, dass am ersten Längsabschnitt ein Orientierungselement (40, 41) vorgesehen ist, dass in einem vorgegebenen räumlichen Bezug zu der Auslassöffnung (50) vorgesehen ist.

Absatz 21. Düsenspitze nach einem der vorhergehenden Absätze, dadurch gekennzeichnet, dass am zweiten Längsabschnitt (24) an der Außenseite eine Skala (86, 88), insbesondere eine WHO-Sonden Skala, zur Ermittlung der Tiefe einer Zahnfleischtasche vorgesehen ist.
Die folgenden Beschreibungsseiten 21 bis 23 enthalten bevorzugte Ausführungsformen.
Ausführungsform 1. Auswechselbare Düsenspitze (20) für ein dentales Pulverstrahlgerät (10) und zur subgingivalen Behandlung eines Zahns, mit
   einem länglichen Körper, der sich in einen ersten (22) und einen zweiten Längsabschnitt (24) gliedert, wobei der erste Längsabschnitt (22) eine Verbindungsschnittstelle (26) für ein lösbares Anbringen an dem Pulverstrahlgerät und der zweite Längsabschnitt (24) einen kreisförmigen Querschnitt mit einem inneren Kanal (82) für ein Pulver-Luft-Gemisch und einer äußeren Mantelfläche (48) aufweist,
   dadurch gekennzeichnet, dass
   an der Mantelfläche (48) des zweiten Längsabschnitts (24) zumindest ein sich in Längsrichtung erstreckendes Wasserführungselement (54) vorgesehen ist,
   eine einzige Auslassöffnung (50) für das Pulver-Luft Gemisch an der Mantelfläche (48) des zweiten Längsabschnitts (24) vorgesehen ist, in die der innere Kanal (82) mündet, und
   der erste Längsabschnitt (22) an seinem dem zweiten Längsabschnitt zugewandten Bereich zumindest eine Öffnung (52) für Wasser aufweist, wobei die zumindest eine Öffnung (52) in das zumindest eine Wasserführungselement (54) mündet.
Ausführungsform 2. Düsenspitze nach Ausführungsform 1, dadurch gekennzeichnet, dass die Auslassöffnung (50) einen Öffnungsbereich aufweist, der sich über zumindest ein Viertel, vorzugsweise die Hälfte des Umfangs des Längsabschnitts erstreckt.
Ausführungsform 3. Düsenspitze nach Ausführungsform 1 oder 2, dadurch gekennzeichnet, dass die Auslassöffnung begrenzt wird durch zwei sich zumindest teilweise radial erstreckende erste Flächen (70) und zwei sich schräg oder parallel zur Längsachse erstreckende zweite Flächen (72), wobei die beiden ersten Flächen (70) in Längsrichtung und die beiden zweiten Flächen (72) in Umfangsrichtung beabstandet sind.
Ausführungsform 4. Düsenspitze nach Ausführungsform 3, dadurch gekennzeichnet, dass die dem ersten Längsabschnitt abgewandte erste Fläche (70U) mehrere Flächenbereiche (74) aufweist, die in Längsrichtung versetzt angeordnet sind.
Ausführungsform 5. Düsenspitze nach Ausführungsform 4, dadurch gekennzeichnet, dass drei in Umfangsrichtung aufeinanderfolgende Flächenbereiche (74L,74M,74R) vorgesehen sind, wobei der mittlere Flächenbereich (74M) in einer Radialebene liegt und in Längsrichtung gesehen näher am ersten Längsabschnitt liegt als die beiden anderen äußeren Flächenbereiche (74L, 74R).
Ausführungsform 6. Düsenspitze nach Ausführungsform 4 oder 5, dadurch gekennzeichnet, dass die beiden äußeren Flächenbereiche (74L, 74R) spiegelsymmetrisch zu einer Längsebene und jeweils verrundet ausgebildet sind.
Ausführungsform 7. Düsenspitze nach einem der vorhergehenden Ausführungsformen, dadurch gekennzeichnet, dass im Bereich des inneren Kanals (82), der in die Auslassöffnung (50) mündet, eine Ablenkfläche (76) vorgesehen ist, die schräg zur Längsachse (L) angeordnet ist, derart, dass das Pulver-Luft Gemisch nach Außen geführt wird.
Ausführungsform 8. Düsenspitze nach Ausführungsform 5 und 7, dadurch gekennzeichnet, dass die Ablenkfläche (76) in den mittleren Flächenbereich (74M) der ersten Fläche (72U) übergeht.
Ausführungsform 9. Düsenspitze nach einem der vorhergehenden Ausführungsformen, dadurch gekennzeichnet, dass der erste Längsabschnitt am Übergang zu dem zweiten Längsabschnitt eine vorzugsweise in einer Radialebene liegende Ringfläche (44) aufweist, in der die zumindest eine Öffnung (52) für Wasser vorgesehen ist.
Ausführungsform 10. Düsenspitze nach einem der vorhergehenden Ausführungsformen, dadurch gekennzeichnet, dass die Mantelfläche (48) als Wasserführungselement (54) dient.
Ausführungsform 11. Düsenspitze nach einem der vorhergehenden Ausführungsformen, dadurch gekennzeichnet, dass das zumindest eine Wasserführungselement (54) als rinnenförmige Ausnehmung (56) in der Mantelfläche (48) des zweiten Längsabschnitts (24) ausgebildet ist.
Ausführungsform 12. Düsenspitze nach einem der vorhergehenden Ausführungsformen, dadurch gekennzeichnet, dass die Verbindungsschnittstelle (26) zumindest ein Halteelement (28) aufweist, das ausgelegt ist, mit entsprechenden Halteelementen (92), vorzugsweise Rastnasen, an dem Pulverstrahlgerät haltend zusammenzuwirken, so dass ein Abfallen der Düsenspitze vom Pulverstrahlgerät verhindert wird, wobei vorzugsweise das Halteelement (28) als Garantiering (29) ausgebildet ist, der eine Sollbruchstelle (64) aufweist, so dass beim Lösen der Düsenspitze vom Pulverstrahlgerät der Garantiering an der Sollbruchstelle aufbricht..
Ausführungsform 13. Düsenspitze nach Ausführungsform 12, dadurch gekennzeichnet, dass der Garantiering (29) an einem Ende des ersten Längsabschnitts angeordnet ist und über einen in Längsrichtung verlaufenden Steg (30) mit dem folgenden Abschnitt des ersten Längsabschnitts verbunden ist, wobei vorzugsweise an dem folgenden Abschnitt mehrere Abstützelemente (38) vorgesehen sind, die ausgebildet sind, den Garantiering (29) beim Aufschieben über die Rastnasen (92) abzustützen.
Ausführungsform 14. Düsenspitze nach einem der Ausführungsformen 1 bis 13, dadurch gekennzeichnet, dass die Verbindungsschnittstelle (26') als Bajonettverschluß (106) ausgebildet ist.
Ausführungsform 15. Düsenspitze nach einem der vorhergehenden Ausführungsformen, dadurch gekennzeichnet, dass am zweiten Längsabschnitt (24) an der Außenseite eine Skala (86, 88), insbesondere eine WHO-Sonden Skala, zur Ermittlung der Tiefe einer Zahnfleischtasche vorgesehen ist.

## Patentansprüche

1. Auswechselbare Düsenspitze (20) für ein dentales Pulverstrahlgerät (10) und zur subgingivalen Behandlung eines Zahns, mit
einem länglichen Körper, der sich in einen ersten (22) und einen zweiten Längsabschnitt (24) gliedert, wobei der erste Längsabschnitt (22) eine Verbindungsschnittstelle (26) für ein lösbares Anbringen an dem Pulverstrahlgerät und der zweite Längsabschnitt (24) einen kreisförmigen Querschnitt mit einem inneren Kanal (82) für ein Pulver-Luft-Gemisch und einer äußeren Mantelfläche (48) aufweist,
wobei
an der Mantelfläche (48) des zweiten Längsabschnitts (24) zumindest ein sich in Längsrichtung erstreckendes Wasserführungselement (54) vorgesehen ist,
eine einzige Auslassöffnung (50) für das Pulver-Luft Gemisch an der Mantelfläche (48) des zweiten Längsabschnitts (24) vorgesehen ist, in die der innere Kanal (82) mündet, und
der erste Längsabschnitt (22) an seinem dem zweiten Längsabschnitt zugewandten Bereich zumindest eine Öffnung (52) für Wasser aufweist, wobei die zumindest eine Öffnung (52) in das zumindest eine Wasserführungselement (54) mündet,
**dadurch gekennzeichnet, dass**
die Verbindungsschnittstelle (26) zumindest ein Halteelement (28) aufweist, das ausgelegt ist, mit entsprechenden Halteelementen (92), vorzugsweise Rastnasen, an dem Pulverstrahlgerät haltend zusammenzuwirken, so dass ein Abfallen der Düsenspitze vom Pulverstrahlgerät verhindert wird, wobei vorzugsweise das Halteelement (28) als Garantiering (29) ausgebildet ist, der eine Sollbruchstelle (64) aufweist, so dass beim Lösen der Düsenspitze vom Pulverstrahlgerät der Garantiering an der Sollbruchstelle aufbricht.

2. Düsenspitze nach Anspruch 1, **dadurch gekennzeichnet, dass** die Auslassöffnung (50) einen Öffnungsbereich aufweist, der sich über zumindest ein Viertel, vorzugsweise die Hälfte des Umfangs des Längsabschnitts erstreckt.

3. Düsenspitze nach Anspruch 1 oder 2, **dadurch gekennzeichnet, dass** die Auslassöffnung begrenzt wird durch zwei sich zumindest teilweise radial erstreckende erste Flächen (70) und zwei sich schräg oder parallel zur Längsachse erstreckende zweite Flächen (72), wobei die beiden ersten Flächen (70) in Längsrichtung und die beiden zweiten Flächen (72) in Umfangsrichtung beabstandet sind.

4. Düsenspitze nach Anspruch 3, **dadurch gekennzeichnet, dass** die dem ersten Längsabschnitt abgewandte erste Fläche (70U) mehrere Flächenbereiche (74) aufweist, die in Längsrichtung versetzt angeordnet sind.

5. Düsenspitze nach Anspruch 4, **dadurch gekennzeichnet, dass** drei in Umfangsrichtung aufeinanderfolgende Flächenbereiche (74L,74M,74R) vorgesehen sind, wobei der mittlere Flächenbereich (74M) in einer Radialebene liegt und in Längsrichtung gesehen näher am ersten Längsabschnitt liegt als die beiden anderen äußeren Flächenbereiche (74L, 74R).

6. Düsenspitze nach Anspruch 4 oder 5, **dadurch gekennzeichnet, dass** die beiden äußeren Flächenbereiche (74L, 74R) spiegelsymmetrisch zu einer Längsebene und jeweils verrundet ausgebildet sind.

7. Düsenspitze nach einem der vorhergehenden Ansprüche, **dadurch gekennzeichnet, dass** im Bereich des inneren Kanals (82), der in die Auslassöffnung (50) mündet, eine Ablenkfläche (76) vorgesehen ist, die schräg zur Längsachse (L) angeordnet ist, derart, dass das Pulver-Luft Gemisch nach Außen geführt wird.

8. Düsenspitze nach Anspruch 5 und 7, **dadurch gekennzeichnet, dass** die Ablenkfläche (76) in den mittleren Flächenbereich (74M) der ersten Fläche (72U) übergeht.

9. Düsenspitze nach einem der vorhergehenden Ansprüche, **dadurch gekennzeichnet, dass** der erste Längsabschnitt am Übergang zu dem zweiten Längsabschnitt eine vorzugsweise in einer Radialebene liegende Ringfläche (44) aufweist, in der die zumindest eine Öffnung (52) für Wasser vorgesehen ist.

10. Düsenspitze nach einem der vorhergehenden Ansprüche, **dadurch gekennzeichnet, dass** die Mantelfläche (48) als Wasserführungselement (54) dient.

11. Düsenspitze nach einem der vorhergehenden Ansprüche, **dadurch gekennzeichnet, dass** das zumindest eine Wasserführungselement (54) als rinnenförmige Ausnehmung (56) in der Mantelfläche (48) des zweiten Längsabschnitts (24) ausgebildet ist.

12. Düsenspitze nach einem der Ansprüche 1 bis 11, **dadurch gekennzeichnet, dass** der Garantiering (29) an einem Ende des ersten Längsabschnitts angeordnet ist und über einen in Längsrichtung verlaufenden Steg (30) mit dem folgenden Abschnitt des ersten Längsabschnitts verbunden ist, wobei vorzugsweise an dem folgenden Abschnitt mehrere Abstützelemente (38) vorgesehen sind, die ausgebildet sind, den Garantiering (29) beim Aufschieben über die Rastnasen (92) abzustützen.

13. Düsenspitze nach einem der Ansprüche 1 bis 12, **dadurch gekennzeichnet, dass** die Verbindungsschnittstelle (26') als Bajonettverschluß (106) ausgebildet ist.

14. Düsenspitze nach einem der vorhergehenden Ansprüche, **dadurch gekennzeichnet, dass** am zweiten Längsabschnitt (24) an der Außenseite eine Skala (86, 88), insbesondere eine WHO-Sonden Skala, zur Ermittlung der Tiefe einer Zahnfleischtasche vorgesehen ist.
